# EUROPEAN PATENT APPLICATION

(11) **EP 2 060 874 A1**
(43) Date of publication of application: **20.05.2009**
(21) Application number: 08168944.0
(22) Date of filing: 12.11.2008
(51) Int. Cl.: G01C 23/00

(54) **Flight plan comparison system and method**

(30) Priority: 13.11.2007 US 939209
(71) Applicant: Honeywell International Inc., Morristown, NJ 07962 (US)
(72) Inventor: McCullough, Susan L., Glendale, AZ 85310 (US); So, Stephen S., Peoria, AZ 85381 (US)
(74) Representative: Buckley, Guy Julian

(57) **Abstract**

A flight plan comparison method is provided to be carried out by a display system (20) deployed on an aircraft. The flight plan comparison method includes the steps of storing a group of flight plans and generating a first flight plan comparison page (50) wherein the values of a first type of variable are graphically expressed for a plurality of flight plans in the group of stored flight plans.

## Description

### TECHNICAL FIELD

The present invention relates generally to an aircraft display system and, more particularly, to a flight plan comparison system and method for comparing a group of stored flight plans.

### BACKGROUND

Conventional flight plan display systems provide a graphical representation of an active flight plan on a graphical display and a textual representation of the active flight plan on a separate Control Display Unit (CDU). The textual representation of the active flight plan produced on the CDU may include route information (e.g., a list of the waypoints defining each segment, or "leg," of an active flight plan) and performance parameters for each leg (e.g., distance information, fuel remaining, winds aloft, groundspeed, etc.). The graphical representation of the flight plan may include a number of interconnected waypoints superimposed over a map view. Various symbols may also be generated on the map view denoting navigational cues (e.g., range rings) and nearby environmental features (e.g., terrain, weather conditions, ground structures, etc.).

Conventional flight plan display systems are often capable of storing multiple auxiliary flight plans in addition to the active flight plan. The auxiliary flight plans may include a temporary flight plan and a number of secondary flight plans. A pilot may choose to forego the active flight plan in favor of one of the auxiliary flight plan for a variety of reasons. For example, an auxiliary flight plan may offer a significant savings in fuel, an earlier ETA, or a shorter distance to traverse. However, typical flight plan systems do not permit information pertaining to multiple flight plans to be simultaneously produced on a single composite display. As a result, the pilot may have to perform a somewhat cumbersome process of cycling through representations of each of the stored flight plans on a single display, or look between separate displays, to compare and contrast pertinent variables (e.g., estimated fuel consumption, ETA, estimated distance traveled, etc.) of the stored flight plans.

There thus exists an on-going need for a flight plan comparison system and method for simultaneously producing representations of multiple types of variables (e.g., estimated fuel consumption, ETA, estimated distance traveled, etc.) for a group of stored flight plans on a single composite display. It would be desirable if such a flight plan comparison system and method would express the values of the variables in a number of different manners (e.g., graphically, numerically, or cartographically). It would also be desirable if such a system and method would sort the stored flight plans and/or identify the most favorable flight plan based upon the values of a selected variable. Other desirable features and characteristics of the present invention will become apparent from the subsequent detailed description of the invention and the appended claims, taken in conjunction with the accompanying drawings and this background of the invention.

### BRIEF SUMMARY

There is provided a flight plan comparison method to be carried out by a display system deployed on an aircraft. The flight plan comparison method includes the steps of storing a group of flight plans and generating a first flight plan comparison page wherein the values of a first type of variable are graphically expressed for a plurality of flight plans in the group of stored flight plans.

A program product is further provided for use in conjunction with a flight plan comparison system having a memory storing a group of flight plans. The program product includes an avionics display program adapted to: generate a first flight plan comparison page wherein the values of multiple variables for a plurality of flight plans in the group of stored flight plans are graphically expressed, and generate a second flight plan comparison page wherein the values of multiple variables for a plurality of flight plans in the group of stored flight plans are textually expressed. Computer-readable media bears the avionics display program.

A flight plan comparison system is further provided for deployment on an aircraft. The flight plan comparison system includes a display device, a user input, a memory storing a group of flight plans, and a controller coupled to the display device, the user input, and the memory. The controller is configured to generate a first flight plan comparison page wherein the values of multiple types of variables are represented for each flight plan in the group of flight plans, receive data from the user input identifying a selected variable type, and visually organize the flight plans by the values of the selected variable type.

### BRIEF DESCRIPTION OF THE DRAWINGS

The present invention will hereinafter be described in conjunction with the following figures, wherein like numerals denote like elements, and:

FIG. 1 is a functional block diagram of a flight plan comparison system in accordance with an exemplary embodiment;

FIGs. 2 and 3 illustrate a first exemplary flight plan comparison page that may be generated by the flight plan comparison system shown in FIG. 1 wherein the values of multiple variables for the stored flight plans are expressed textually;

FIG. 4 illustrates the first flight plan comparison page shown in FIGs. 2 and 3 after the flight plans have been sorted based upon the values of a selected variable (i.e., estimated fuel consumption);

FIG. 5 illustrates a second exemplary flight plan comparison page that may be generated by the flight plan comparison system shown in FIG. 1 wherein the values of multiple variables for the stored flight plans are expressed graphically; and

FIG. 6 illustrates a third exemplary flight plan comparison page that may be generated by the flight plan comparison system shown in FIG. 1 wherein the stored flight plans are superimposed over a map view.

### DETAILED DESCRIPTION OF AT LEAST ONE EXEMPLARY EMBODIMENT

The following Detailed Description is merely exemplary in nature and is not intended to limit the invention or the application and uses of the invention. Furthermore, there is no intention to be bound by any theory presented in the preceding Background or the following Detailed Description.

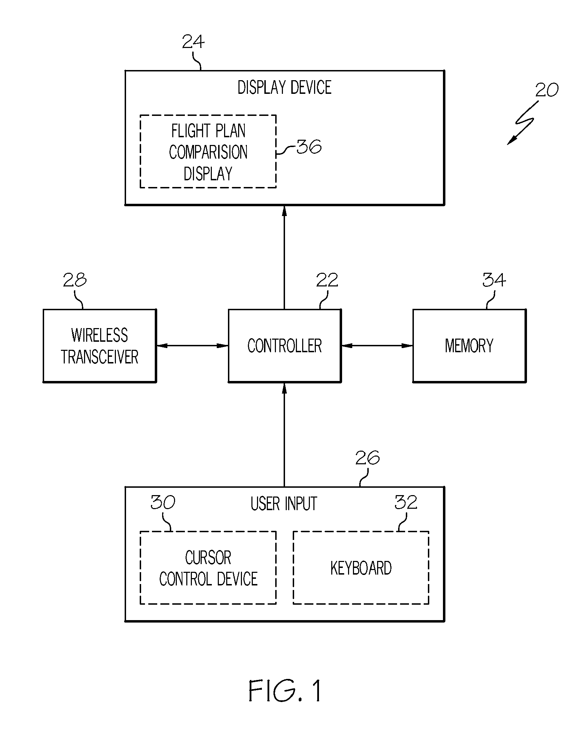

FIG. 1 is a generalized block diagram of flight plan comparison system **20** suitable for deployment on an aircraft. Flight plan comparison system **20** comprises a controller **22,** a display device **24,** and a user input **26.** Display device **24** is coupled to an output of controller **22,** and user input **26** is coupled to an input of controller **22.** If desired, a wireless transceiver **28** may also be coupled to controller **22** so as to permit bi-directional communication between controller **22** and a remote data source (e.g., an air traffic control unit). User input **26** may comprise any device suitable for receiving selection data of the type described herein from a pilot or other user of system **20.** For example, as indicated in FIG. 1, user input **26** may comprise a cursor control device **30** (e.g., a trackball) and a keyboard **32.** Similarly, display device **24** may comprise any image-generating device capable of producing one or more flight plan comparison pages of the type described below. A non-exhaustive list of display devices suitable for use as display device **24** includes cathode ray tube, liquid crystal, active matrix, and plasma display devices.

A memory **34** is associated with controller **22.** Memory **34** stores data related to a group of flight plans associated with the particular aircraft on which flight plan comparison system **20** is deployed. Each flight plan in the group of flight plans may be manually programmed into memory **34** (e.g., utilizing user input **26)** or, instead, installed into memory **34** by way of software or wireless uplink (e.g., received via wireless transceiver **28).** Although any suitable number of flight plans may be stored in memory **34,** the following will discuss an exemplary group of five stored flight plans. For ease of reference, the flight plans stored in this group will be referred to as the ACTIVE flight plan ("ACT"), the TEMPORARY flight plan ("TMPY"), the SECONDARY ONE flight plan ("SEC1"), the SECONDARY TWO flight plan ("SEC2"), and the SECONDARY THREE ("SEC3") flight plan; however, it will be appreciated that this terminology may vary amongst different systems and manufacturers.

In addition to memory **34,** controller **22** may comprise, or be associated with, any suitable number of additional conventional electronic components, including, but not limited to, various combinations of microprocessors, flight control computers, navigational equipment, memories, power supplies, storage devices, interface cards, and other standard components known in the art. Furthermore, controller **22** may include, or cooperate with, any number of software programs (e.g., avionics display programs) or instructions designed to carry out the various methods, process tasks, calculations, and control/display functions described below.

As is the case with many conventional flight plan display systems, flight plan comparison system **20** may generate a graphical display on display device **24** and a textual display on a Control Display Unit (not shown) indicative of various aspects of a selected flight plan in the group of stored flight plans. However, in contrast to typical flight plan display systems, system **20** may further generate a flight plan comparison display **36** on display device **24** that simultaneously expresses the values of one or more variables associated with multiple flight plans stored in memory **34.** As will be described below in detail, flight plan comparison display **36** may express the values of these variables in a variety of manners (e.g., textually, graphically, or cartographically), organize the stored flight plans by the values of a selected variable, and/or identify the flight plan having the most favorable value for each variable.

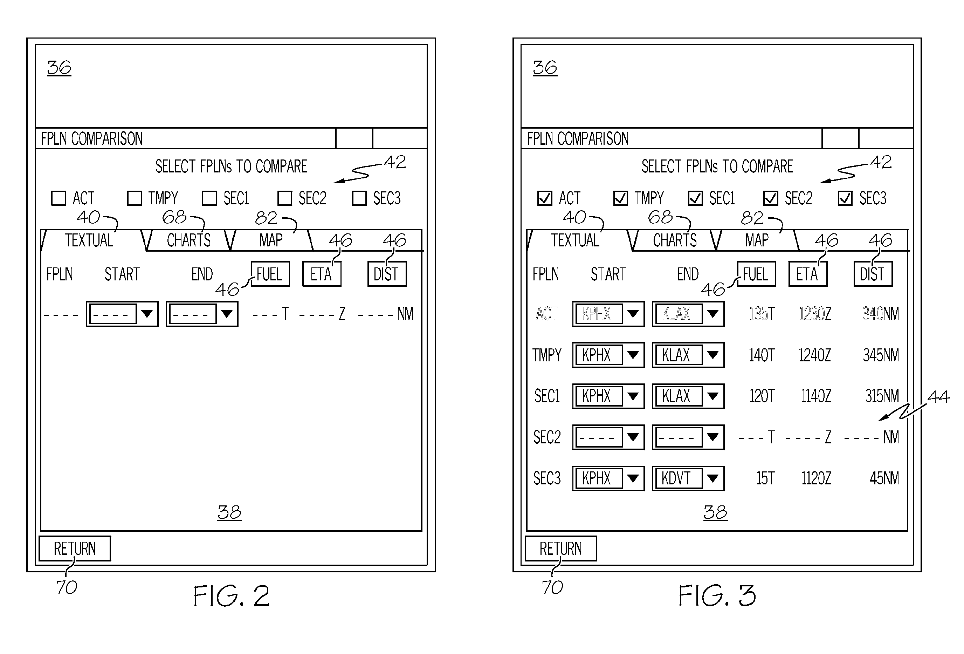

A specific exemplary embodiment of flight plan comparison display **36** will now be described in conjunction with FIGs. 2-5. Before embarking on a discussion of this example, however, it should be emphasized that the functionality of flight plan comparison system **20** and the appearance of display **36** will inevitably vary amongst embodiments. In the following example, flight plan comparison display **36** is shown and described as comprising a graphic user interface. However, in alternative embodiments, flight plan comparison display **36** may be produced on a line-based display device (e.g., a conventional Control Display Unit). If system **20** comprises a graphical user interface, it will be appreciated that the graphical user interface may accord with ARINC 661 specifications or other such specification protocols. Also, as noted below, embodiments of the invention may be implemented utilizing a software component, such as an ARINC 661 user application definition file.

FIGs. 2 and 3 illustrate an exemplary embodiment of flight plan comparison display **36,** which controller **22** may generate on display device **24** (FIG. 1). Flight plan comparison display **36** includes at least one flight plan comparison page, which indicates the values of one or more variables for multiple flight plans stored in memory **34.** For example, as shown in FIGs. 2 and 3, display **36** may include a first flight plan comparison page **38** that textually expresses the values of multiple variables for the stored flight plans. The values of three types of variables are textually expressed: i.e., estimated fuel consumption (in tons), estimated time of arrival (in Zulu time), and distance traveled (in nautical miles). A selection tab **40** is associated with flight plan comparison page **38** and may include a text label (e.g., "TEXTUAL") or other such identifier specific to page **38.** As explained below, selection tab **40** may comprise a user-interactive element that permits a user to navigate between flight plan comparison page **38** and additional flight plan comparison pages utilizing user input **26** (FIG. 1).

Flight plan comparison page **38** further includes a flight plan selection feature **42** that permits a user to specify which of the stored flight plans are displayed for comparison. As shown in FIGs. 2 and 3, flight plan selection feature **42** may take the form of a series of check boxes. Each check box is associated with a different flight plan stored in memory **34** (indicated by text labels "ACT," "TMPY," "SEC 1," "SEC 2," and "SEC 3"). When a particular check box is selected (e.g., utilizing user input **26),** information relating to the flight plan associated with the checked check box appears on display **36.** This may be appreciated by comparing FIG. 2, wherein all check boxes are unchecked and thus no flight plan information is displayed on display **36,** to FIG. 3, wherein all check boxes have been checked and thus information relating to each of the stored flight plans is displayed on display **36.** If no information is stored in memory **34** (FIG. 1) relating to a selected flight plan, a series of dashes may appear in the appropriate row as indicated in FIG. 3 at **44** (i.e., no information is stored in memory relating to the SECONDARY TWO flight plan). This example notwithstanding, it will be appreciated that the flight plan selection feature may assume the form of various other interactive selection means. Furthermore, in alternative embodiments, a flight plan selection feature may not be provided; instead, the values of one or more variables may automatically be displayed for each of the flight plans stored in memory **34** (FIG. 1).

As noted above, flight plan comparison page **38** expresses the values for one or more flight plan variables in a textual manner. In one embodiment, the values of the flight plan variables may be conveyed utilizing alphanumeric symbols arranged in a table format. An example of such a table is shown in FIG. 3. As indicated by the labels listed in the table's first column (FPLN), each row in the table represents a different flight plan. Furthermore, the table's fourth, fifth, and sixth columns may indicate the type of variable displayed for each flight plan; e.g., estimated fuel consumed (FUEL), estimated time of arrival (ETA), and estimated distance traveled (DIST), respectively. If desired, the textual information related to a particular flight plan also may be color coded for ease of reference. For example, information related to the active flight plan (ACT) may be produced in green font, information related to the temporary flight plan (TMPY) may be produced in yellow font, and information related to the secondary flight plans (SEC1, SEC2, and SEC3) may be produced in white font.

Referring still to FIG. 3, the variable data produced in the table's fourth, fifth, and sixth columns may be representative of an entire flight plan (i.e., from the original waypoint to the destination waypoint) or of a portion of the flight plan (e.g., from the aircraft's current position to the destination waypoint). Alternatively, the starting and ending waypoints may be adjustable by a pilot (or other such user). For example, flight plan comparison system **20** may be configured such that a pilot may change the starting waypoint to any waypoint encountered along the appropriate flight plan and the ending waypoint to any waypoint encountered along the flight plan succeeding the starting waypoint. For example, first and second drop down menus may be provided for selecting the starting endpoint and the ending endpoint, respectively, for each flight plan. When a particular drop down menu is selected, a list of waypoints included in the flight plan associated with the drop down menu is produced. A pilot may then set the desired waypoint by selecting the waypoint from the list utilizing user input **26** (FIG. 1). In this manner, the pilot may compare the quantitative data for a particular leg, or legs, of one flight plan to the quantitative data for a particular leg, or legs, of a second flight plan.

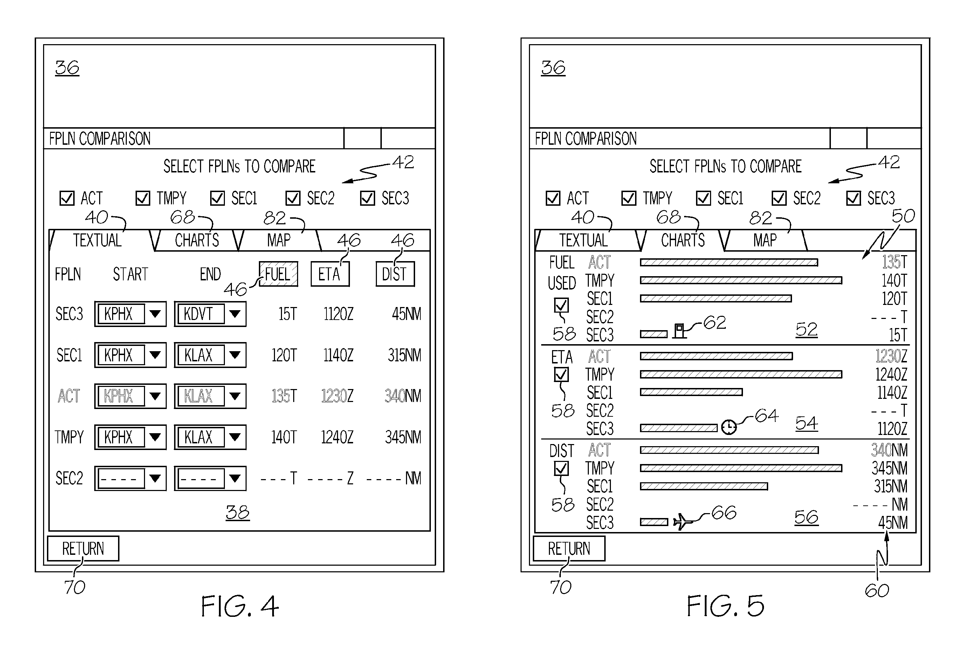

In a preferred embodiment, a sort function is provided for one or more of the quantitative variables shown in the fourth column (FUEL), the fifth (ETA), and the sixth column (DIST). For example, as shown in FIGs. 2 and 3, first, second, and third interactive elements **46** (e.g., a virtual pushbuttons) are provided above the fourth column (FUEL), the fifth column (ETA), and the sixth column (DIST), respectively. When one of the virtual pushbuttons is activated utilizing user input **26** (FIG. 1), flight plan comparison system **20** sorts the flight plans by the value of the quantitative variable associated with the pushbutton. The flight plans are then organized in ascending or descending order. To further illustrate this point, FIG. 4 depicts flight plan comparison page **38** after the FUEL pushbutton has been activated. As shown in FIG. 4, the flight plans have been organized in ascending order such that the flight plan (SECONDARY THREE) having the lowest estimated fuel consumption (15 tons) is listed in the uppermost row, while the flight plan (TEMPORARY) having the highest estimated fuel consumption (140 tons) is listed in a lower row. The SECONDARY TWO flight plan is listed in the lowermost row because, in this example, no data has been stored for the SECONDARY TWO flight plan. By providing a sort function of this type, flight comparison display **36** may enable a pilot to quickly ascertain which flight plan or plans has the most favorable, and the least favorable, value for a selected variable.

If the variable data produced in the table's fourth, fifth, and sixth columns is determined in relation to the aircraft's current position, the value of variables will continually change during flight. To ensure that the values of the variables shown in flight plan comparison display **36** are up-to-date, the flight plan data may be periodically refreshed at a desired rate (e.g., every 10 seconds). If the flight plan data is sorted based upon the values of a selected variable, the sort order may be automatically adjusted in accordance with the refresh data.

FIG. 5 illustrates a second flight plan comparison page **50** that may be generated on flight plan comparison display **36.** As does flight plan comparison page **38** (FIGs. 2-4), flight plan comparison page **50** visually expresses the values of one or more quantitative variables for a plurality of flight plans stored in memory **34.** However, in contrast to page **38,** flight plan comparison page **50** expresses the values of these variables graphically. Specifically, flight plan comparison page **50** conveys the relative values of the variables as a graph. In one option, flight plan comparison page **50** includes a series of bar graphs with each bar graph representing a different type of variable. For example, as shown in FIG. 5, flight plan comparison page **50** may include a first bar graph **52** representing the estimated fuel consumption (FUEL USED), a second bar graph **54** representing the estimated time of arrival (ETA), and a third bar graph 56 representing the estimated distance traveled (DIST) for the stored flight plans. Each bar in graphs **52, 54,** and **56** is associated with a particular flight plan stored in memory **34** (FIG. 1) as may be indicated by the text labels ACT, TMPY, SEC1, SEC2, and SEC 3. Again, a bar graph is not produced for SEC2 because, in this example, no data exists in memory **34** related to the SECONDARY TWO flight plan. If desired, an interactive element **58** (e.g., a check box) may be associated with each bar graph **52, 54, 56** to enable a pilot to choose whether or not the bar graph is displayed. Furthermore, a numerical readout may also be provided for each bar in graphs **52, 54,** and **56** as generally shown in FIG. 5 at **60.**

In a preferred embodiment, flight plan comparison page **50** identifies the flight plan with the most favorable value for one or more of the quantitative variables. Although this may be accomplished by sorting the flight plans in the manner described above, it is preferred that a universally-recognized icon is produced next to the graphical representation of the flight plan having the most favorable value for each variable. For example, as shown in FIG. 5, a gas pump icon **62** may be produced adjacent the bar associated with the flight plan (SECONARY THREE) having the lowest estimated fuel consumption (15 tons); a clock icon **64** may be produced adjacent the bar associated with the flight plan (SECONDARY THREE) having the earliest ETA (11:20 hours); and an aircraft icon **66** may be produced adjacent the bar associated with the flight plan (SECONARY THREE) traversing the shortest distance (45 nautical miles). If the values of the variables shown in flight plan comparison page **50** are determined in relation to the aircraft's current position, the graphical representation of the variables may be continually modified to reflect any changes in value occurring during flight.

A selection tab **68** (labeled CHARTS) is associated with flight plan comparison page **50** (FIG. 5). As stated above, a selection tab **40** (labeled TEXTUAL) is associated with flight plan comparison page **38** (FIGs. 2-4). A pilot may navigate between flight plan comparison page **50** and flight plan comparison page **38** by selecting the appropriate selection tab (i.e., tab **68** and tab **40,** respectively). Other navigational elements may also be produced on flight comparison display **36.** For example, as shown in FIGs. 2-5, a RETURN button **70** may be provided near the bottom of flight comparison display **36.** When RETURN button **70** is selected, flight plan comparison system **20** may generate a top level main menu on display device **24.**

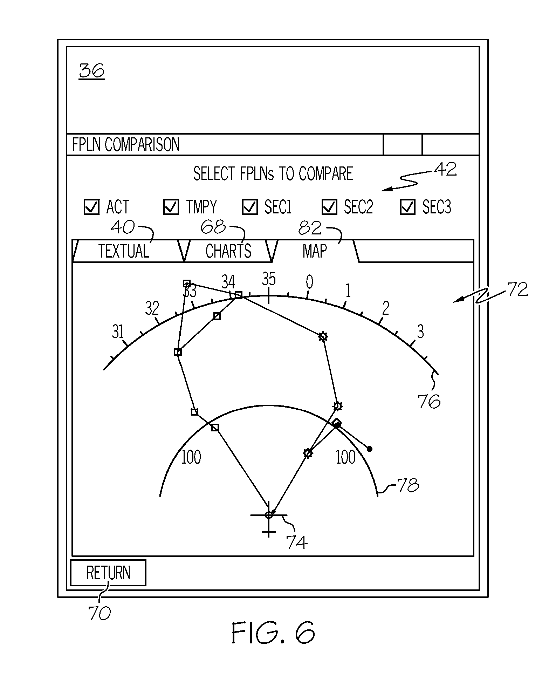

FIG. 6 illustrates a third flight plan comparison page **72** that may be generated on flight plan comparison display **36.** Flight plan comparison page **72** visually expresses the values of one or more aspects of each flight plan in the group of flight plans stored in memory **34** in a third manner, namely by producing a cartographic representation of each stored flight plan (or a portion thereof). In particular, each stored flight plan may be superimposing over a map view. As indicated in FIG. 6, this map view may be drawn from a two-dimensional planform perspective, although it will be appreciated that other perspectives are possible (e.g., a forward-looking, three dimensional perspective). To distinguish amongst the plurality of stored flight plans, the cartographic representation of the stored flight plans may be distinguished utilizing color-coding. Alternatively, each of the flight plans may be distinguished by utilizing distinctive waypoint markers as shown in FIG. 6. If desired, other graphics may be provided on map view, including, for example, an aircraft graphic **74,** a heading graphic **76,** a range ring graphic **78,** and various symbols indicative of terrain, weather, and structures (not shown in FIG. 6 for clarity). Again, flight plan comparison page **72** may have a selection tab **82** associated therewith, which may be utilized in conjunction with selections tabs **40** and **68** to navigate between respective flight plan comparison pages **72, 38,** and **50** in the manner described above.

In the foregoing example, three quantitative variables were visually represented in flight plan comparison display **36** (i.e., estimated fuel consumed, estimate time of arrival, and estimated distance traveled); however, it should be appreciated that any suitable number of quantitative variables may be displayed. Furthermore, other types of quantitative variables may be displayed in addition to, or in lieu of, the above-described quantitative variables. For example, the flight plan comparison system may be configured to display values relating to a quantitative cost assessment for each flight plan (or portion thereof). The cost assessment may be based upon a variety of factors, such as the estimated cost of fuel consumed and estimated distance traveled.

It should thus be appreciated that there has been provided a flight plan comparison system and method for simultaneously producing representations of multiple types of variables (e.g., estimated fuel consumption, ETA, estimated distance traveled, etc.) for a group of stored flight plans on a single composite display. In at least one embodiment, the flight plan comparison system and method expresses the values of the variables in a number of different manners (e.g., graphically, numerically, or cartographically). Furthermore, in at least one embodiment, the system and method sorts the stored flight plans, and identifies the most favorable flight plan, based upon the values of a selected variable.

Although an exemplary embodiment of the present invention has been described above in the context of a fully-functioning computer system (i.e., flight plan comparison system **20** described above in conjunction with FIG. 1), those skilled in the art will recognize that the mechanisms of the present invention are capable of being distributed as a program product (i.e., an avionics display program) and, furthermore, that the teachings of the present invention apply to the program product regardless of the particular type of computer-readable media (e.g., floppy disc, hard drive, memory card, optical disc, etc.) employed to carry-out its distribution. Also, as noted above, the invention may take the form of graphical user interface (e.g., ARINC 661) components, which includes a user application definition file (UADF). As will be appreciated by one skilled in the art, such a UADF is loaded into an aircraft display system and defines the "look and feel" of the display, the menu structure hierarchy, and various other static components of the flight plan comparison display.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A flight plan comparison method to be carried out by a display system (20) deployed on an aircraft, the flight plan comparison method comprising:
storing a group of flight plans; and
generating a first flight plan comparison page (50) wherein the values of a first type of variable are graphically expressed for a plurality of flight plans in the group of stored flight plans.

2. A flight plan comparison method according to Claim 1 wherein the step of generating comprises producing a bar graph (52, 54, 56) wherein each bar in the bar graph indicates the value of the first type of variable for a different flight plan in the plurality of flight plans.

3. A flight plan comparison method according to Claim 1 further comprising the step of producing a second flight plan comparison page (38) wherein the values of the first type of quantity are textually expressed for a plurality of flight plans in the group of stored flight plans.

4. A flight plan comparison method according to Claim 3 wherein the first flight comparison page (50) has a first selection tab (68) associated therewith and wherein the second flight comparison page (38) has a second selection tab (40) associated therewith, the method further comprising:
recalling the first flight plan comparison page when the first selection tab is selected; and
recalling the second flight plan comparison page when the second selection tab is selected.

5. A flight plan comparison method according to Claim 1 further comprising:
receiving user data identifying at least one selected leg of a first flight plan in the group of stored flight plans; and
generating a first flight plan comparison page (50) wherein the value of a first type of variable is graphically indicated for the at least one selected leg of the first flight plan.

6. A flight plan comparison method according to Claim 1 further comprising:
receiving user data identifying a selected plurality of flight plans in the group of stored flight plans; and
visually indicating the value of the first type of variable for only those flight plans in the selected plurality of flight plans.

7. A flight plan comparison method according to Claim 1 further comprising the step of visually sorting the group of stored flight plans by the value of the first type of variable.

8. A flight plan comparison method according to Claim 1 wherein a first type of variable and a second type of variable are textually expressed for each of the plurality of flight plans, and wherein the method further comprises:
producing a first user-interactive element (46) and a second user-interactive element (46);
organizing the plurality of flight plans by the first variable when the first user-interactive element is activated; and
organizing the plurality of flight plans by the second variable when the second user-interactive variable is activated.

9. A flight plan comparison method according to Claim 1 further comprising the step of visually identifying which of the group of stored flight plans is associated with the lowest value of the first type of quantity.

10. A flight plan comparison method according to Claim 9 wherein the step of visually identifying comprises displaying an icon (62, 64, 66) adjacent the flight plan in the group of stored flight plans associated with the lowest value of the first type of variable.
